# EUROPÄISCHE PATENTSCHRIFT

(11) **EP 3 196 446 B1**
(45) Veröffentlichungstag und Bekanntmachung des Hinweises auf die Patenterteilung: **01.05.2024**
(21) Anmeldenummer: 16204200.6
(22) Anmeldetag: 15.12.2016
(51) Int. Cl.: F02D 41/00, F02D 13/02, F02D 19/02

(54) **VERFAHREN ZUM BETREIBEN EINER BRENNKRAFTMASCHINE UND BRENNKRAFTMASCHINE**
COMBUSTION ENGINE AND METHOD FOR OPERATING A COMBUSTION ENGINE
PROCÉDÉ DE FONCTIONNEMENT D'UN MOTEUR À COMBUSTION INTERNE ET MOTEUR À COMBUSTION INTERNE

(30) Priorität: 21.12.2015 DE 102015226323
(43) Veröffentlichungstag der Anmeldung: 26.07.2017
(73) Patentinhaber: VOLKSWAGEN AKTIENGESELLSCHAFT, 38440 Wolfsburg (DE)
(72) Erfinder: Scheller, Pierre, 38458 Velpke (DE)

(56) Entgegenhaltungen:
- WO-A1-2012/021990
- CA-A1- 2 881 529
- DE-A1-102006 014 965
- DE-A1-102013 219 982

## Beschreibung

Die Erfindung betrifft ein Verfahren zum Betreiben einer Brennkraftmaschine mit den Merkmalen gemäß dem Oberbegriff des Anspruchs 1. Des Weiteren betrifft die Erfindung eine Brennkraftmaschine gemäß dem Oberbegriff des Anspruchs 10.

Ein vorteilhafter Kraftstoff für Brennkraftmaschinen ist Gas, insbesondere Erdgas, zum Beispiel Compressed Natural Gas (CNG), mit einem hohen Methananteil, da es eine große Oktanzahl und einen hohen Reinheitsgrad aufweist. Es gibt grundlegend zwei verschiedene Wege, das Gas einer Brennkammer der Brennkraftmaschine zuzuführen: In einer ersten Klasse von Brennkraftmaschinen erfolgt eine Saugrohreinblasung, bevorzugt an einer Mehrzahl von Positionen in zylinderindividuellen Fluidleitungen des Saugrohrs (äußere Gemischbildung). In einer zweiten Klasse von Brennkraftmaschinen wird das Gas direkt in die Brennkammer injiziert (innere Gemischbildung).

Versorgt werden die Injektoren mit Gas für die innere Gemischbildung aus einem Gasverteilerrohr (Gasrail), welches mit einem bestimmten Gasdruck betrieben wird und über einen Druckminderer mit einem Gastank verbunden ist. Die Höhe des bestimmten Gasdruck bedingt die Injektionszeit für das Gas in die Brennkammer, welche sich mit zunehmendem Gasdruck verkürzt. Aus praktischen Gründen sollte der bestimmte Gasdruck aber eher niedrig festgelegt sein, da er gleichzeitig den minimalen Druck definiert, bei dem noch Gas aus dem Gastank in das Gasrail strömt. In der Folge ergeben sich Restriktionen für die Injektionszeiten von Gas in die Brennkammer hinein. Limitierend für die zur Verfügung stehende Zeitdauer (Zeitfenster) für die Einbringung des Gases ist einerseits das Schließen des Auslassventils, damit unverbranntes Gas nicht aus der Brennkammer gespült wird. Anderseits muss die Einbringung des Gases beendet sein, bevor der Druck in der Brennkammer während der Kompression zu hohe Werte annimmt. Wenn der Druck in der Brennkammer höher als der Gasdruck ist, kann aufgrund des Widerstands nicht die gewünschte Gasmenge in die Brennkammer gelangen oder sogar eine Rückströmung von Gas durch den Injektor erfolgen.

Damit scheint die einbringbare Gasmenge bei einer Direktinjektion grundlegend beschränkt. Fraglich ist daher, welche Variabilität hinsichtlich dem Einsetzen der Kompression und dem Schließen des Auslassventils besteht.

Aus dem Dokument DE 10 2012 001 650 A1 gehen ein Verfahren zum Betreiben einer Brennkraftmaschine sowie eine Brennkraftmaschine hervor. Die Brennkraftmaschine ist bivalent wahlweise mit einem ersten Kraftstoff, der in ein Saugrohr eingebracht wird, insbesondere Gas, und mit einem zweiten Kraftstoff, der direkt in eine Brennkammer eingespritzt wird, insbesondere Benzin, betreibbar. Vor dem Hintergrund, trotz unterschiedlicher Kraftstoffeigenschaften einen niedrigen Verbrauch beim Betrieb der Brennkraftmaschine zu erzielen, können für verschiedene Betriebsarten die Zeitdauer der Öffnungszeiten eines Einlassventils der Brennkammer und der Schließzeitpunkt des Einlassventils in Abhängigkeit des Drehmoments variiert werden.

Zum Beispiel ist im Dokument DE 10 2006 014 965 A1 eine Brennkraftmaschine, bevorzugt ein Ottomotor, mit einer Nockenwelle beschrieben, der als Direkteinspritzer ausgeführt und alternativ zu Benzin unter anderem auch mit verdichtetem Erdgas betreibbar ist. Ein Nocken ist relativ zur Nockenwelle verstellbar, so dass eine Ventilsteuerzeit des diesem Nocken zugeordneten Gaswechselventils variiert werden kann. Der verstellbare Nocken steuert bevorzugt gleichzeitig ein Einlassventil und ein Auslassventil eines Zylinders der Brennkraftmaschine an.

Aus dem Dokument US 2015/0252695 A1 ist ein bivalenter Gas-Dieselmotor bekannt, in welchem der Kurbelwellenwinkel, an dem das Öffnungsmaximum eines Auslassventils liegt, variierbar ist. Um die Steuerzeit des Auslassventils zu verändert, gelangt zum Beispiel ein Phasensteller oder ein Nockenumschalter zum Einsatz. Bevorzugt handelt es sich um einen Zweitaktmotor.

Aus den Dokumenten WO 2012/021990 A1 und CA 2 881 529 A1 gehen kompressionsgezündete oder fremdgezündete Brennkraftmaschinen hervor, welche mit Gas stöchiometrisch betreibbar sind. Mittels eines variablen Ventiltriebs sind Steuerzeiten und/oder Öffnungsweiten veränderbar. Das Einlassventil kann vor dem Ende des Einlasstaktes oder während des Kompressionstaktes geschlossen werden. Das Gas wird bevorzugt im Kompressionstakt nach Schließen des Einlassventils direkt in die Brennkammern eingeblasen.

Im Dokument DE 10 2013 219 982 A1 wird ein Verfahren zum Betrieb einer fremdgezündeten Viertakt-Brennkraftmaschine mit Gas als Treibstoff beschrieben. In bestimmten Lastsituationen wird die Brennkraftmaschine mit positiver Ventilüberschneidung betrieben. Das Gas wird direkt in die Brennkammern eingeblasen, nachdem das Einlassventil geschlossen wurde.

Vor diesem Hintergrund stellt sich die Frage, inwiefern das Zeitfenster für die Gasinjektion vergrößert werden kann.

Aufgabe der vorliegenden Erfindung ist es, für eine mit Gas betreibbare Brennkraftmaschine ein großes Zeitfenster für die Injektion von Gas direkt in die Brennkammer zu ermöglichen.

Diese Aufgabe wird erfindungsgemäß durch ein Verfahren zum Betreiben einer Brennkraftmaschine mit den Merkmalen gemäß Anspruch 1 gelöst. Vorteilhafte Weiterbildungen der Erfindung sind in den abhängigen Ansprüchen charakterisiert.

Im erfindungsgemäßen Verfahren zum Betreiben einer Brennkraftmaschine umfasst die Brennkraftmaschine wenigstens eine Brennkammer, die wenigstens ein Einlassventil und wenigstens ein Auslassventil aufweist, und ist das wenigstens eine Einlassventil für ein Einlassevent zum Einbringen einer Ladung in die Brennkammer für die Zeitdauer des Drehens um einen Kurbelwellenwinkel öffnenbar (kann geöffnet werden). Erfindungsgemäß wird Gas direkt in die wenigstens eine Brennkammer der Brennkraftmaschine eingeblasen, nachdem das wenigstens eine Auslassventil geschlossen wird und bevor die in der Brennkammer befindliche Ladung mit eingeblasenem Gas verdichtet wird. Dabei wird das wenigstens eine Einlassventil vor Schließen des wenigstens einen Auslassventils für das Einlassevent geöffnet. Dabei wird wenigstens ein Teil der Menge des Gases direkt in die wenigstens eine Brennkammer der Brennkraftmaschine eingeblasen, während das wenigstens eine Einlassventil geöffnet ist, wobei die Brennkraftmaschine mit einem Verdichter aufgeladen wird.

Mit anderen Worten, im erfindungsgemäßen Verfahren wird eine Überschneidung der Öffnungszeiten des wenigstens einen Auslassventils und des wenigstens einen Einlassventils bewirkt (Ventilüberschneidung). Dieser Vorgang wird auch verbreitet als Scavenging bezeichnet. Auf diese Weise wird vorteilhaft das Restgas aus dem Brennraum ausgespült (spülender Ladungswechsel), wodurch sich eine verglichen zum Betrieb ohne Ventilüberschneidung höhere Frischluftfüllung ergibt.

Aufgrund des erfindungsgemäßen frühen Öffnens des Einlassventils steht bis zur Verdichtung der in der Brennkammer befindlichen Ladung ein großes Zeitfenster für das Einblasen des Gases zur Verfügung.

Bei mehreren Auslassventilen können insbesondere alle Auslassventile im betreffenden erfindungsgemäßen Schritt geschlossen werden. Bei mehreren Einlassventilen können insbesondere alle Einlassventile im betreffenden erfindungsgemäßen Schritt geöffnet werden. Ein Einlassevent ist eine Zeitdauer, während der das wenigstens eine Einlassventil, insbesondere wenigstens ein der mehreren Einlassventile, von einem Zeitpunkt, an dem das wenigstens eine Einlassventil, insbesondere wenigstens ein der mehreren Einlassventile, geschlossen ist, bis zu einem ersten darauf nachfolgenden Zeitpunkt, an dem das wenigstens eine Einlassventil, insbesondere wenigstens ein der mehreren Einlassventile, wieder geschlossen ist, geöffnet ist. Jedes weitere nachfolgende Öffnen und Schließen definiert ein weiteres Einlassevent.

Im erfindungsgemäßen Verfahren gibt es bevorzugt genau ein Einlassevent. Des Weiteren gibt es bevorzugt auch nur ein Auslassevent, für welches eine analoge Definition zu Einlassevent gilt.

Es ist besonders bevorzugt, wenn im erfindungsgemäßen Verfahren das Einlassventil geschlossen wird, bevor oder (bevorzugt) nachdem die Brennkammer ein maximales Volumen erreicht/erreicht hat, das heißt vor dem Ende eines Ansaugtaktes beziehungsweise bevorzugt bereits im Kompressionstakt. Mit anderen Worten, die Brennkraftmaschine wird in einem Miller-Zyklus betrieben. Damit ist die geometrische Expansion erhöht, ohne den Verdichtungsdruck zu erhöhen.

Es hat sich als besonders vorteilhaft für eine optimierte Frischluftfüllung herausgestellt, das Einlassevent für die Brennkammer der Brennkraftmaschine derart zu gestalten, dass der Kurbelwellenwinkel des Einlassevents größer als 188 Grad und kleiner als 200 Grad, insbesondere größer als 190 Grad und kleiner als 198 Grad, bevorzugt größer als 192 Grad und kleiner als 196 Grad, ist. Die sich auf den Zyklus des Brennverfahrens beziehende Zeit wird in Kurbelwellenwinkelgröße bemessen, und relative Zeitangaben werden in Kurbelwellenwinkellagen angegeben.

In bevorzugter Ausführungsform gelangt das Verfahren bei fremdgezündeten Brennkraftmaschinen zum Einsatz. Mit anderen Worten, in bevorzugter Ausführung wird die verdichtete in der Brennkammer befindliche Ladung fremdgezündet. Auf diese Weise werden die vorteilhaften Verbrennungseigenschaften des Gases genutzt.

Es ist besonders vorteilhaft, wenn in der Brennkraftmaschine das Öffnen des wenigstens einen Einlassventils mittels eines Phasenstellers in seiner Kurbelwellenwinkellage verstellbar ist oder verstellt wird. Erfindungsgemäß kann mittels eines Phasenstellers einer Einlassnockenwelle der Brennkraftmaschine das Öffnen des wenigstens einen Einlassventils von einem ersten Zeitpunkt, welcher nach dem Schließen des Auslassventils liegt, auf einen zweiten Zeitpunkt, welcher vor dem Schließen des Auslassventils liegt, verstellt werden. Auf diese Weise ist die Ventilüberschneidung einstellbar, insbesondere wahlweise an- und abstellbar.

Des Weiteren oder alternativ dazu ist es in einer Weiterentwicklung vorteilhaft, wenn in der Brennkraftmaschine das Schließen des wenigstens einen Auslassventils mittels eines Phasenstellers in seiner Kurbelwellenwinkellage verstellbar ist oder verstellt wird. Erfindungsgemäß kann mittels eines Phasenstellers einer Auslassnockenwelle der Brennkraftmaschine das Schließen des wenigstens einen Auslassventils von einem ersten Zeitpunkt, welcher vor dem Öffnen des Einlassventils liegt, auf einen zweiten Zeitpunkt, welcher nach dem Öffnen des Einlassventils liegt, verstellt wird. Auf diese Weise ist ebenfalls die Ventilüberschneidung einstellbar, insbesondere wahlweise ein- und abstellbar. Darüber hinaus kann das Ausspülen des Restgases aus dem Brennraum unterstützt, bevorzugt noch weiter verstärkt werden.

Um einen Füllungsnachteil insbesondere im Teillastbereich zu verringern oder bevorzugt sogar zu kompensieren, kann im erfindungsgemäßen Verfahren ein Massenstrom durch eine Drosselvorrichtung der Brennkraftmaschine erhöht wird, indem die Öffnung der Drosselvorrichtung vergrößert wird. In vorteilhafter Weise können dadurch auch Ladungswechselverluste dank eines höheren Saugrohrdrucks gemindert werden.

Im Zusammenhang des erfinderischen Gedankens steht auch eine Brennkraftmaschine, welche mit Gas als Kraftstoff betreibbar ist. Die erfindungsgemäße Brennkraftmaschine weist ein Motorsteuergerät auf, welches wenigstens einen Rechner und ein Speicherelement umfasst. Dabei ist in dem Speicherelement ein Programm abgelegt, welches bei wenigstens teilweiser Ausführung im Rechner die Schritte eines Verfahrens mit Merkmalen oder Merkmalskombinationen gemäß dieser Darstellung ausführt.

Die Brennkraftmaschine kann eine Traktionsmaschine eines Fahrzeugs, insbesondere eines gleislosen Landfahrzeugs sein. Die Brennkraftmaschine kann aufladbar sein, insbesondere kann die Brennkraftmaschine eine Aufladegruppe, zum Beispiel mit wenigstens einem, bevorzugt genau einem Abgasturbolader, aufweisen.

Die erfindungsgemäße Brennkraftmaschine kann darüber hinaus auch eine Flüssigkraftstoffverteileranlage aufweisen, so dass die Brennkraftmaschine bivalent wechselweise mit einem Flüssigkraftstoff, insbesondere mit Benzin, und mit Gas betreibbar ist. Insbesondere kann es sich auch um eine Brennkraftmaschine mit Direkteinspritzung des Flüssigkraftstoffs handeln.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine Topologie einer Ausführungsform einer Brennkraftmaschine in einem Fahrzeug mit Motorsteuergerät, in welchem ein Programm zur Durchführung des erfindungsgemäßen Verfahrens vorhanden ist,
- Figur 2: eine schematische Darstellung des Ablaufs einer bevorzugten Ausführungsform des erfindungsgemäßen Verfahrens, und
- Figur 3: bevorzugte Verläufe von Ventilhubverläufen der bevorzugten erfindungsgemäßen Ausführungsform.

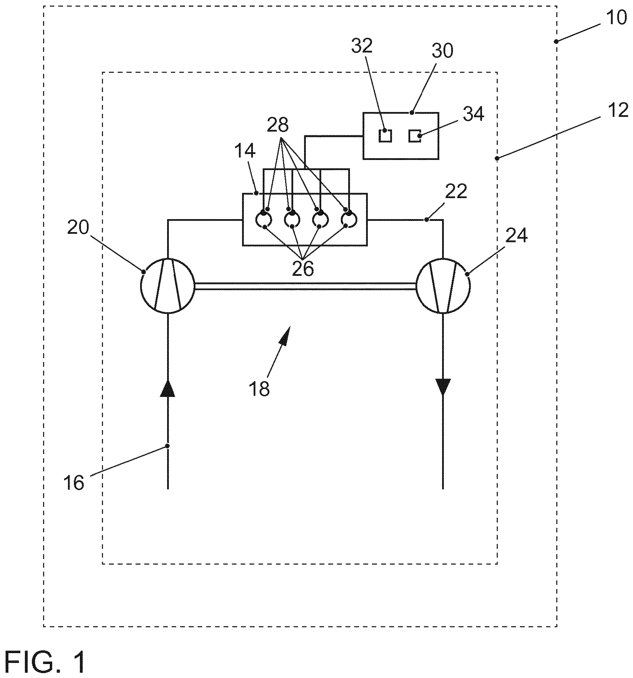

Figur 1 zeigt eine Topologie einer Ausführungsform einer Brennkraftmaschine 12, welche mit Gas, insbesondere Erdgas oder CNG, als Kraftstoff betrieben wird, in einem Fahrzeug 10 mit einem Motorsteuergerät 30 und einem Motorblock 14. Die Brennkraftmaschine 12 ist in dieser bevorzugten Ausführungsform eine fremdgezündete Brennkraftmaschine.

Die Brennkraftmaschine 12 ist mittels eines Abgasturboladers 18 aufladbar. Dem Motorblock 14, bevorzugt einem Hubkolbenmotor mit hier beispielhaft vier Brennkammern 26 oder Zylindern, wird durch eine Frischgasanlage 16 Luft zugeführt. Die Luft wird mit einem Verdichter 20 des Abgasturboladers 18 in der Frischgasanlage 16 komprimiert. Stromab des Verdichters 20 befindet sich eine hier nicht zeichnerisch dargestellte Drosselvorrichtung. Jeder Brennkammer 26 ist ein Gasinjektor 28 zugeordnet, mit welchem Gas direkt in die Brennkammer eingebracht werden kann. An die Gasinjektoren 28 wird das Gas ausgehend von einem hier nicht zeichnerisch dargestellten Gastank über ein hier nicht zeichnerisch dargestelltes Gasrail verteilt. Das Gasrail befindet sich stromab eines hier nicht zeichnerisch dargestellten Druckminderventils, welches den Gasdruck vom Tankdruck auf den Gasraildruck reduziert. Das aus den Brennkammern 26 abgeführte Abgas gelangt in eine Abgasanlage 22, in welcher es zunächst eine Turbine 24 des Abgasturboladers 18 antreibt. Das entspannte Abgas strömt danach durch hier nicht zeichnerisch dargestellte Komponenten der Abgasnachbehandlung.

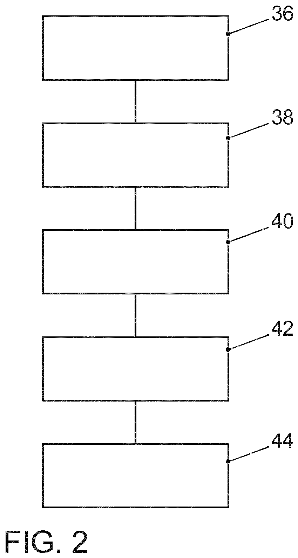

Die Figur 2 stellt schematisch den Ablauf einer bevorzugten Ausführungsform des erfindungsgemäßen Verfahrens dar. Eine fremdgezündete Brennkraftmaschine 12 mit einer Topologie gemäß der Figur 1 wird mit Gas als Kraftstoff betrieben, wobei taktweise wenigstens ein Einlassventil und wenigstens ein Auslassventil einer Brennkammer 26 geöffnet und geschlossen werden sowie die verdichtete Ladung mit eingeblasenem Gas fremdgezündet wird. Gegen Ende eines Arbeitstaktes wird das wenigstens eine Auslassventil geöffnet, um das Abgas aus der Brennkammer hauptsächlich während des Ausstoßtaktes zu entfernen. Erfindungsgemäß wird im Schritt 36 das wenigstens eine Einlassventil für ein Einlassevent geöffnet, bevor das wenigstens eine Auslassventil bereits wieder geschlossen ist. Auf diese Weise wird eine Ventilüberschneidung bewirkt. Nach einem Schritt 38, in welchem das wenigstens eine Auslassventil geschlossen wird, beginnt das Zeitfenster, in welchem Gas in die Brennkammer eingeblasen wird (Schritt 40), wobei noch das wenigstens eine Einlassventil geöffnet ist und die Brennkraftmaschine mittels des Verdichters aufgeladen wird. Das Zeitfenster erstreckt sich dann insbesondere in den Ansaugtakt hinein. Es wird nicht mehr eingeblasen, sobald die Ladung mit dem eingeblasen Gas in der Brennkammer 26 verdichtet wird. Das ist insbesondere dann der Fall, wenn das wenigstens eine Einlassventil geschlossen worden ist und gleichzeitig das Volumen der Brennkammer geometrisch reduziert wird. In einem Schritt 42 wird das wenigstens eine Einlassventil geschlossen, nachdem die Brennkammer 26 ein maximales Volumen erreicht hat und das Volumen bereits wieder abnimmt (Miller-Zyklus). Es schließt sich im Schritt 44 das Verdichten der Ladung an, welche danach gezündet wird, so dass ein nächster Arbeitstakt beginnt.

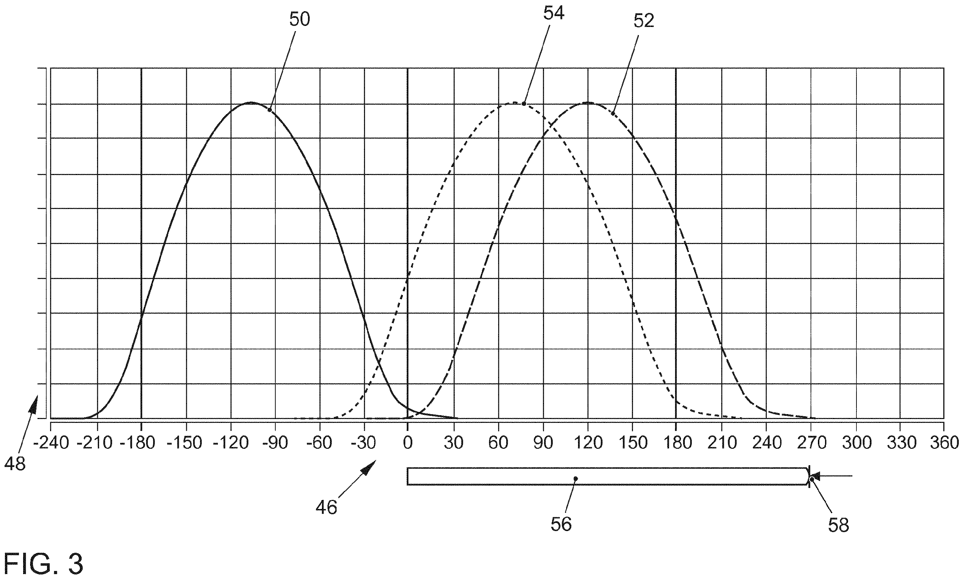

Die Figur 3 zeigt bevorzugte Verläufe von Ventilhubverläufen der bevorzugten erfindungsgemäßen Ausführungsform. In Funktion der Kurbelwellenwinkelposition 46 in Grad (°KW) ist die Höhe des Ventilhubs 48 gezeigt. Der Kurbelwellenwinkel ist ein Maß für die relative Zeit im Takt des Brennverfahrens. Die Kurbelwellenwinkel 0 Grad und 360 Grad sind die Zeitpunkte des minimalen Volumens der Brennkammer, die Kurbelwellenwinkel -180 Grad und 180 Grad sind die Zeitpunkt des maximalen Volumens der Brennkammer. Die Zündung erfolgt im Bereich von 360 Grad Kurbelwellenwinkel. Der Auslassventilhubverlauf 50 erstreckt sich im Wesentlichen von -240 Grad bis 30 Grad Kurbelwellenwinkel. In Figur 3 ist zunächst eine Referenz 52 des Hubverlaufs für ein Einlassventil gezeigt. Diese Referenz 52 stellt die typische Lage des Hubverlaufs in Funktion des Kurbelwellenwinkels dar, welcher beispielsweise für den Kraftstoff Benzin zum Einsatz gelangen kann. Der Einlassventilhubverlauf 54 liegt erfindungsgemäß früher im Takt als die Referenz 52. Da der Einlassventilhubverlauf 54 sich im Wesentlichen von -60 Grad bis 210 Grad erstreckt, ist bei diesem Einlassevent eine Ventilüberschneidung realisiert.

Im gezeigten Beispiel steht für die Referenz 52 des Hubverlaufs ein Zeitfenster 56 von Kurbellwellenwinkel 0 Grad bis 270 Grad vor der Zündung bei 360 Grad Kurbelwellenwinkel für die Einbringung des Gases in die Brennkammer zur Verfügung. Wenn bei geöffnetem Einlassventil Gas injiziert wird, strömt ein Teil des Gases durch das Einlassventil in Richtung Frischgasanlage, insbesondere Saugrohr. Somit stellt sich ein Betriebspunkt ein, der vergleichbar mit einer äußeren Gemischbildung ist.

Die Länge des Einlassevents ist aus Gründen einer optimalen Frischgasfüllung in bevorzugter Ausführung auf 194 Grad Kurbelwellenwinkel festgelegt. Um den Vorteil der Einblasung direkt in die Brennkammer insbesondere im Low-End-Torque-Bereich nutzen zu können, muss das Einblasen nach dem Schließen des Einlassventils abgesetzt werden. Im Zusammenhang der Referenz 52 ist das im gezeigten Beispiel bei 240 Grad Kurbelwellenwinkel der Fall. Somit stehen bis zur Grenze der Einblasung bei 270 Grad wegen des ansteigenden Zylinderdrucks nur 30 Grad Kurbelwellenwinkel zur Verfügung, um die gesamte Erdgasmenge abzusetzen.

Um das Zeitfenster für das Einblasen des Gases zu vergrößern, wird das Einlassevent mithilfe eines Phasenstellers auf eine frühe Position, bevorzugt auf eine maximal frühe Position verlegt, wobei eine Ventilüberschneidung mit dem Auslassventil stattfindet. Beispielhaft ist hier eine Verstellung um 60 Grad Kurbelwellenwinkel gezeigt, so dass nunmehr 90 Grad Kurbelwellenwinkel für die Zufuhr des Gases zur Verfügung stehen. Generell ist diese Betriebsart besonders für den Low-End-Torque-Bereich bei aufgeladenen mit Gas betriebenen Brennkraftmaschinen von Interesse, da hier die Turbinenleistung für die Kompensation des Füllungsnachteils einer äußeren Gemischbildung nicht ausreicht.

Für Betriebspunkten, in denen der Turbine genügend Abgasenthalpie zu Verfügung steht, kann der Beginn der Injektion des Gases erfindungsgemäß auch schon während des geöffneten Einlassventils stattfinden. Dem hierdurch entstehenden Füllungsnachteil wird erfindungsgemäß durch einen angehobenen Ladedruck effektiv entgegengewirkt. Auf diese Weise kann das zur Verfügung stehende Zeitfenster noch weiter vergrößert werden. Im gezeigten Beispiel sind 270 Grad Kurbelwellenwinkel Zeitfenster erreichbar.

Im Teillastbereich wirkt sich der beschriebene Betrieb mit äußerer Gemischbildung sogar positiv auf den Verbrauch der Brennkraftmaschine aus. Der Füllungsnachteil wird hier durch eine weitere Öffnung der Drosselvorrichtung, zum Beispiel einer Drosselklappe, kompensiert.

### Bezugszeichenliste

- 10: Fahrzeug
- 12: Brennkraftmaschine
- 14: Motorblock
- 16: Frischgasanlage
- 18: Abgasturbolader
- 20: Verdichter
- 22: Abgasanlage
- 24: Abgasturbine
- 26: Brennkammer
- 28: Gasinjektor
- 30: Motorsteuergerät
- 32: Rechner
- 34: Speicherelement
- 36: Schritt des Öffnens des Einlassventils
- 38: Schritt des Schließens des Auslassventils
- 40: Schritt des Einblasens des Gases
- 42: Schritt des Schließens des Einlassventils
- 44: Schritt des Verdichtens der Ladung
- 46: Kurbelwellenwinkelposition
- 48: Ventilhub
- 50: Auslassventilhubverlauf
- 52: Referenz des Hubverlaufs
- 54: Einlassventilhubverlauf
- 56: Zeitfenster für Einblasung von Gas
- 58: Grenze der Einblasung

## Patentansprüche

1. Verfahren zum Betreiben einer mit einem Verdichter (20) aufgeladenen Brennkraftmaschine (12) mit wenigstens einer Brennkammer (26), die wenigstens ein Einlassventil und wenigstens ein Auslassventil aufweist, und wobei das wenigstens eine Einlassventil für ein Einlassevent zum Einbringen einer Ladung in die Brennkammer (26) für die Zeitdauer des Drehens um einen Kurbelwellenwinkel geöffnet wird,
in welchem Gas direkt in die wenigstens eine Brennkammer (26) der Brennkraftmaschine (12) eingeblasen wird, nachdem das wenigstens eine Auslassventil geschlossen wird und bevor die in der Brennkammer (26) befindliche Ladung mit eingeblasenem Gas verdichtet wird,
und wobei das wenigstens eine Einlassventil vor Schließen des wenigstens einen Auslassventils für das Einlassevent geöffnet wird, **dadurch gekennzeichnet dass** wenigstens ein Teil der Menge des Gases direkt in die wenigstens eine Brennkammer (26) der Brennkraftmaschine (12) eingeblasen wird, während das wenigstens eine Einlassventil geöffnet ist.

2. Verfahren zum Betreiben einer Brennkraftmaschine (12) gemäß Anspruch 1,
**dadurch gekennzeichnet**
**dass** das Einlassventil geschlossen wird, bevor oder nachdem die Brennkammer (26) ein maximales Volumen erreicht.

3. Verfahren zum Betreiben einer Brennkraftmaschine (12) gemäß Anspruch 1 oder 2,
**dadurch gekennzeichnet**
**dass** der Kurbelwellenwinkel des Einlassevents größer als 188 Grad und kleiner als 200 Grad ist.

4. Verfahren zum Betreiben einer Brennkraftmaschine (12) gemäß einem der vorstehenden Ansprüche,
**dadurch gekennzeichnet**
**dass** die verdichtete in der Brennkammer befindliche Ladung fremdgezündet wird.

5. Verfahren zum Betreiben einer Brennkraftmaschine (12) gemäß Anspruch 1,
**dadurch gekennzeichnet**
**dass** ein Massenstrom durch eine Drosselvorrichtung der Brennkraftmaschine (12) erhöht wird, indem die Öffnung der Drosselvorrichtung vergrößert wird.

6. Verfahren zum Betreiben einer Brennkraftmaschine (12) gemäß einem der vorstehenden Ansprüche,
**dadurch gekennzeichnet**
**dass** das Gas ein CNG ist.

7. Brennkraftmaschine (12), welche mit Gas als Kraftstoff betreibbar ist, mit einem Motorsteuergerät (30), welches wenigstens einen Rechner (32) und ein Speicherelement (34) umfasst,
**dadurch gekennzeichnet**
**dass** in dem Speicherelement (34) ein Programm abgelegt ist, welches bei wenigstens teilweiser Ausführung im Rechner (32) die Schritte eines Verfahrens gemäß einem der vorstehenden Ansprüche ausführt.

8. Brennkraftmaschine (12) gemäß Anspruch 7,
**gekennzeichnet durch**
eine Aufladegruppe mit einem Abgasturbolader.

9. Brennkraftmaschine (12) gemäß Anspruch 7 oder 8,
**dadurch gekennzeichnet**
**dass** die Brennkraftmaschine bivalent wechselweise mit Flüssigkraftstoff und mit Gas betreibbar ist.

10. Brennkraftmaschine (12) gemäß Anspruch 9,
**dadurch gekennzeichnet**
**dass** der Flüssigkraftstoff Benzin ist.

## Claims

1. Method for operating a combustion engine (12) turbocharged by a compressor (20), comprising at least one combustion chamber (26) which has at least one inlet valve and at least one outlet valve, and wherein the at least one inlet valve is opened for an inlet event for introducing a charge into the combustion chamber (26) for the period of the rotation by a crankshaft angle, in which period gas is blown directly into the at least one combustion chamber (26) of the combustion engine (12) after the at least one outlet valve is closed and before the charge located in the combustion chamber (26) is compressed by blown-in gas,
and wherein
the at least one inlet valve is opened before closing the at least one outlet valve for the inlet event, **characterized in that**
at least a portion of the quantity of the gas is blown directly into the at least one combustion chamber (26) of the combustion engine (12) while the at least one inlet valve is open.

2. Method for operating a combustion engine (12) according to claim 1,
**characterized in that**
the inlet valve is closed before or after the combustion chamber (26) reaches a maximum volume.

3. Method for operating a combustion engine (12) according to claim 1 or 2,
**characterized in that**
the crankshaft angle of the inlet event is greater than 188 degrees and less than 200 degrees.

4. Method for operating a combustion engine (12) according to any of the preceding claims,
**characterized in that**
the compressed charge located in the combustion chamber is ignited externally.

5. Method for operating a combustion engine (12) according to claim 1,
**characterized in that**
a mass flow through a throttle device of the combustion engine (12) is increased by enlarging the opening of the throttle device.

6. Method for operating a combustion engine (12) according to any of the preceding claims,
**characterized in that**
the gas is a CNG.

7. Combustion engine (12), which can be operated with gas as fuel, comprising an engine control unit (30) which has at least one computer (32) and a memory element (34),
**characterized in that**
a program is stored in the memory element (34), which program executes the steps of a method according to any of the preceding claims when at least partially executed in the computer (32).

8. Combustion engine (12) according to claim 7,
**characterized by**
a turbocharging unit having an exhaust gas turbocharger.

9. Combustion engine (12) according to claim 7 or 8,
**characterized in that**
the combustion engine can be operated in a bi-fuel manner alternately using liquid fuel and using gas.

10. Combustion engine (12) according to claim 9,
**characterized in that**
the liquid fuel is gasoline.

## Revendications

1. Procédé permettant de faire fonctionner un moteur à combustion interne (12) suralimenté par un compresseur (20) et comportant au moins une chambre de combustion (26) qui présente au moins une soupape d'admission et au moins une soupape d'échappement, et dans lequel l'au moins une soupape d'admission est ouverte pour un événement d'admission pour l'introduction d'une charge dans la chambre de combustion (26) pour la durée de la rotation d'un angle de vilebrequin, pendant laquelle durée du gaz est injecté directement dans l'au moins une chambre de combustion (26) du moteur à combustion interne (12) après que l'au moins une soupape d'échappement est fermée et avant que la charge se trouvant dans la chambre de combustion (26) ne soit comprimée avec du gaz injecté,
et dans lequel
l'au moins une soupape d'admission est ouverte avant la fermeture de l'au moins une soupape d'échappement pour l'évènement d'admission,
**caractérisé en ce**
**qu**'au moins une partie de la quantité du gaz est injectée directement dans l'au moins une chambre de combustion (26) du moteur à combustion interne (12) pendant que l'au moins une soupape d'admission est ouverte.

2. Procédé permettant de faire fonctionner un moteur à combustion interne (12) selon la revendication 1,
**caractérisé en ce**
**que** la soupape d'admission est fermée avant ou après que la chambre de combustion (26) ait atteint un volume maximal.

3. Procédé permettant de faire fonctionner un moteur à combustion interne (12) selon la revendication 1 ou 2,
**caractérisé en ce**
**que** l'angle de vilebrequin de l'évènement d'admission est supérieur à 188 degrés et inférieur à 200 degrés.

4. Procédé permettant de faire fonctionner un moteur à combustion interne (12) selon l'une des revendications précédentes,
**caractérisé en ce**
**que** la charge comprimée se trouvant dans la chambre de combustion est soumise à un allumage externe.

5. Procédé permettant de faire fonctionner un moteur à combustion interne (12) selon la revendication 1,
**caractérisé en ce**
**qu**'un débit massique est augmenté par un dispositif d'étranglement du moteur à combustion interne (12) en agrandissant l'ouverture du dispositif d'étranglement.

6. Procédé permettant de faire fonctionner un moteur à combustion interne (12) selon l'une des revendications précédentes,
**caractérisé en ce**
**que** le gaz est un GNC.

7. Moteur à combustion interne (12) qui peut fonctionner avec du gaz en tant que carburant, comportant un appareil de commande de moteur (30), lequel appareil de commande de moteur comprend au moins un ordinateur (32) et un élément formant mémoire (34),
**caractérisé en ce**
**qu**'un programme est stocké dans l'élément formant mémoire (34), lequel programme, lorsqu'il est exécuté au moins partiellement dans l'ordinateur (32), exécute les étapes d'un procédé selon l'une des revendications précédentes.

8. Moteur à combustion interne (12) selon la revendication 7,
**caractérisé par**
un groupe de suralimentation comportant un turbocompresseur à gaz d'échappement.

9. Moteur à combustion interne (12) selon la revendication 7 ou 8,
**caractérisé en ce**
**que** le moteur à combustion interne peut fonctionner de manière bivalente et alternativement avec du carburant liquide et avec du gaz.

10. Moteur à combustion interne (12) selon la revendication 9,
**caractérisé en ce**
**que** le carburant liquide est de l'essence.
